# EUROPEAN PATENT APPLICATION

(11) **EP 1 772 681 A2**
(43) Date of publication of application: **11.04.2007**
(21) Application number: 06018736.6
(22) Date of filing: 07.09.2006
(51) Int. Cl.: F24F 5/00, F24F 3/14

(54) **A desiccant air-conditioning system**

(30) Priority: 07.10.2005 JP 2005294547; 12.05.2006 JP 2006133837
(71) Applicant: JAPAN EXLAN COMPANY LIMITED, Osaka-shi Osaka 530 (JP)
(72) Inventor: Inaba, Hideo, Okayama-shi Okayama (JP); Maeda, Kensaku, Yokohama-shi Kanagawa (JP); Nishida, Ryosuke Saidaiji Plant, 3-chome Okayama-shi Okayama (JP)
(74) Representative: Patentanwälte Ruff, Wilhelm, Beier, Dauster & Partner

(57) **Abstract**

Described herein is a desiccant air-conditioning system which is characterized in that the system is equipped with an introducing route where process air is introduced into a geothermal heat exchanger, a supplying route where the process air which is cooled by the geothermal heat exchanger is introduced into a space to be air-conditioned and a desiccant wheel which is placed in an extending manner over both of the introducing route and the supplying route and, when the desiccant wheel is rotated so that each part thereof is successively positioned to said introducing route and supplying route, the process air after cooling is dehumidified by said desiccant wheel and the desiccant wheel is regenerated by the process air before cooling.

## Description

### Technical Field of the Invention

The present invention relates to a desiccant air-conditioning system utilizing geothermal energy where process air is passed through a geothermal heat exchanger to subject to heat exchange and provided to a space to be air-conditioned.

### Background Art

Underground temperature which is 5 to 100 meters beneath the earth surface is stable throughout the year and is about 15°C (± 2°C) . Therefore, an air-conditioning system utilizing geothermal energy in which process air (air in the room or open air) is subjected to heat exchange by passing through a geothermal heat exchanger and provided to a space to be air-conditioned has been proposed and utilized (Japanese Patent Laid-Open No. 2005-9737). The air-conditioning system as such is the so-called environmentally friendly system where energy consumption and CO₂ generation are little and is an effective countermeasure for avoiding the heat island phenomenon.

When such an air-conditioning system utilizing the geothermal energy is used for the purpose of air-conditioning of a room, the process air is able to be cooled down to about 20°C because the underground temperature is about 15°C. The temperature of about 20°C is lower than room temperature whereby sensible heat load in the air-conditioning load is able to be removed by a geothermal heat exchanger. However, the air after cooling is cooled only to about 20°C which is higher than the required dew point temperature (which is usually 15°C when temperature of the space to be air-conditioned is 26°C and relative humidity thereof is 50%) of the space to be air-conditioned and, therefore, latent heat load is unable to be sufficiently removed. Accordingly, there is a problem that humidity level of the room becomes high.

To remove the moisture, it is necessary that air in a room is cooled by the low temperature heat source having about 5 to 10°C which is lower than a dew point temperature (15 to 16°C) and, for such an object, another air conditioner is necessary whereby there is no advantage of utilization of geothermal energy.

### Disclosure of the Invention

### Problems that the Invention is to Solve

An object of the present invention is to provide a practical air-conditioning system which is energy-saving and environmentally friendly where cooled and dehumidified air is able to be provided into a room without other artificial low temperature heat source.

### Means for Solving the Problems

In order to achieve the above-mentioned object, a desiccant air-conditioning system mentioned in claim 1 is characterized in that the system is equipped with an introducing route where process air is introduced into a geothermal heat exchanger, a supplying route where the process air which is cooled by the geothermal heat exchanger is introduced into a space to be air-conditioned and a desiccant wheel which is placed in an extending manner over both of the introducing route and the supplying route and, when the desiccant wheel is rotated so that each part thereof is successively positioned to the above-mentioned introducing route and supplying route, the process air after cooling is dehumidified by said desiccant wheel and the desiccant wheel is regenerated by the process air before cooling.

In the invention mentioned in claim 1, the process air which is introduced firstly regenerates the desiccant wheel, then cooled by being introduced to a geothermal heat exchanger whereby moisture is also removed, dehumidified in a desiccant wheel and is provided as the process air having a required dew point temperature to the space to be air-conditioned.

The desiccant air-conditioning system mentioned in claim 2 is the invention according to claim 1, wherein a heating means for heating the introduced process air or the above-mentioned desiccant wheel is provided in the above-mentioned introducing route.

In the invention mentioned in claim 2, the process air introduced into the introducing route or a desiccant wheel is heated whereby regeneration of the desiccant wheel by the introduced air is promoted.

The desiccant air-conditioning system mentioned in claim 3 is the invention according to claim 2, wherein far-infrared heater is used as the above-mentioned heating device.

In the invention mentioned in claim 3, regeneration of the desiccant wheel is promoted by a simple constitution and by a less expensive means.

The desiccant air-conditioning system mentioned in claim 4 is the invention according to any of claims 1 to 3, wherein a heating medium passage where heating medium is flown into the earth is used as the above-mentioned geothermal heat exchanger.

In the invention mentioned in claim 4, a desiccant air-conditioning system where geothermal energy is efficiently utilized is provided.

### Advantage of the Invention

According to the desiccant air-conditioning system mentioned in claims 1 to 4, it is possible to provide an air-conditioning system which is energy-saving and environmentally friendly by which cooled and dehumidified air is able to be provided into a room without an artificial low temperature heat source.

### Brief Description of the Drawings

Fig. 1 shows a desiccant air-conditioning system of the first embodiment of this invention.
Fig. 2 is a drawing which shows psychrometric chart for illustrating the process of desiccant air-conditioning system of the first embodiment.
Fig. 3 shows a desiccant air-conditioning system of the second embodiment of this invention.
Fig. 4 shows a desiccant air-conditioning system of the third embodiment of this invention.
Fig. 5 is a drawing which shows psychrometric chart for illustrating the process of desiccant air-conditioning system of the third embodiment.
Fig. 6 shows a desiccant air-conditioning system of the fourth embodiment of this invention.
Fig. 7 is a drawing which shows psychrometric chart for illustrating the process of desiccant air-conditioning system of the fourth embodiment.
Fig. 8 shows a desiccant air-conditioning system of the fifth embodiment of this invention.
Fig. 9 is a drawing which shows psychrometric chart for illustrating the process of desiccant air-conditioning system of the fifth embodiment.
Fig. 10 shows a desiccant air-conditioning system of the sixth embodiment of this invention.

### Best Mode for Carrying Out the Invention

As hereunder, embodiments of this invention will be illustrated by referring to the drawings.

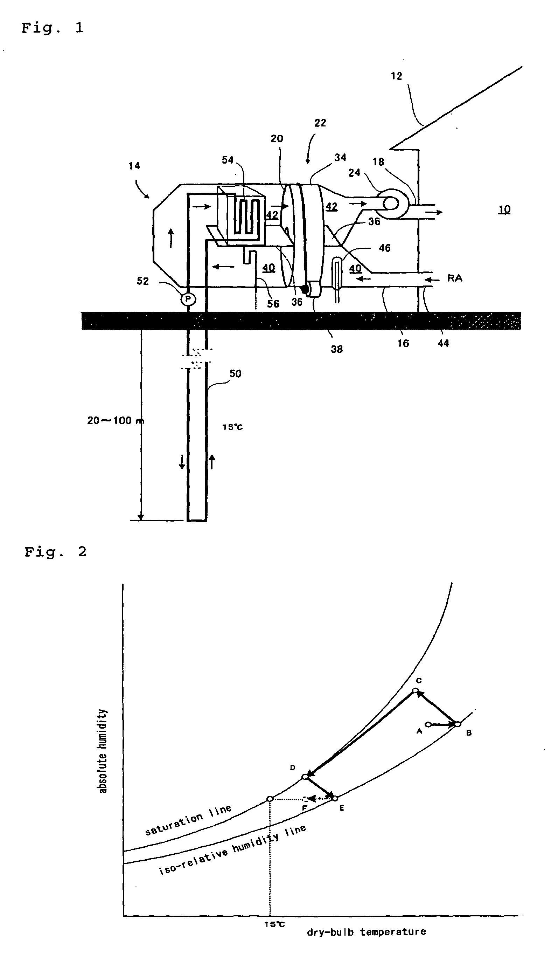

Fig. 1 shows a desiccant air-conditioning system of the first embodiment of this invention and has a geothermal heat exchanger 14 installed near a building 12 forming a space to be air-conditioned 10, an introducing route 16 where return air RA from the inside of a room (space to be air-conditioned) 10 is taken in as process air and introduced to a geothermal heat exchanger 14, a supplying rout 18 where air which is cooled by means of heat exchange in a geothermal heat exchanger 14 is provided to the space to be air-conditioned 10, a desiccant dehumidifying apparatus 22 using a desiccant wheel 20 placed in an extending manner over both of the introducing route 16 and supplying route 18 so as to interrupt them and a blower 24 which blows air to those routes.

The desiccant air-conditioning system is constituted in a casing 34 forming a cylindrical or disk-shaped inner space and the desiccant wheel 20 is placed inside the casing 34 in a freely rotating manner. The space inside the casing 34 is sectioned by a partition board 36 into upper space and lower space with a plane including an axial line and one of them is connected to an introducing route 16 forming a regenerating zone 40 where the desiccant wheel 20 is regenerated by an introduced air (moisture in the desiccant wheel 20 is removed) . Another space is connected to a supplying route 18 forming an adsorbing zone 42 where the provided air is dehumidified by the desiccant wheel 20 (moisture is adsorbed by the desiccant wheel 20). Another side of the desiccant wheel 20 (a side which is opposite to the introducing route or the supplying route against the desiccant wheel) is tightly closed. The desiccant wheel 20 is equipped with a driving motor 38 which rotates the wheel at a predetermined speed.

With regard to a desiccant wheel 20, it is possible to adopt a known one where a predetermined porous desiccant (adsorbing agent) is made into a disk-shaped material having a honeycomb-shaped reinforced structure. With regard to a raw material for the desiccant, it is preferred to use a material where difference in adsorbing and desorbing amounts is big within a range in which relative humidity is from 70 to 100% such as a functional organic sorptive agent having an acryl group, silica gel or active carbon and it is more preferred to use a material where antifungal and antibacterial properties are high at the range in which the relative humidity is high (such as a functional organic sorptive agent having an acryl group) .

The geothermal heat exchanger 14 is equipped, for example, with a heating medium passage 50 of a circulation type formed by embedding of a pipe made of metal having good heat conductivity such as copper or aluminum or synthetic resin in a depth of about 20 to 100 meters into the earth and a heating medium such as water is circulated between the areas under and on the earth being driven by a pump 52. The area of the heating medium passage on the earth is introduced into a space of the secondary side in a casing 34 and forms a gas-liquid heat exchange part 54 where a heat exchange is conducted with the process air. The gas-liquid heat exchange part 54 has a serpentine piping for increasing its contacting area and has a drainage pipe 56 so as to introduce the condensed water.

In this embodiment, a far-infrared heater (heating means) 46 is installed at the inlet of the introducing route 16 or, in other words, inside the air intake 44 in an encountering manner to a desiccant wheel 20. This is used when the relative humidity of air from the space to be air-conditioned 10 is high or the absolute humidity is high or the temperature is low and it may be installed upon necessity. In that case, it is possible that a humidity sensor is installed in the space to be air-conditioned 10 and makes the far-infrared heater 46 on when the detected humidity is high. It is also possible that a heater is embedded in a desiccant wheel 20 as another heating means and is made on when its part is at the side of the introducing route 16. It is further possible that a heat exchanger which exchanges heat of process air with hot water is installed as a heating means at the upper stream side of the desiccant wheel 20 and that heat collected by a solar heat collector is used as a heat source for hot water.

Although not shown in the drawing, it is possible that a well-known controlling means is installed and that various operation controls are carried out using various sensors, etc. installed in the space tobe air-conditioned, etc. For example, a desiccant air-conditioning system is able to be operated by both manual mode and automatic mode and, in the automatic mode, a desiccant wheel 20 is rotated when the humidity detected by a humidity sensor installed in the space to be air-conditioned (relative humidity, dew point temperature or absolute humidity) is higher than the predetermined allowable upper limit while, when the detected humidity is lower than the predetermined allowable value, the desiccant wheel 20 is stopped.

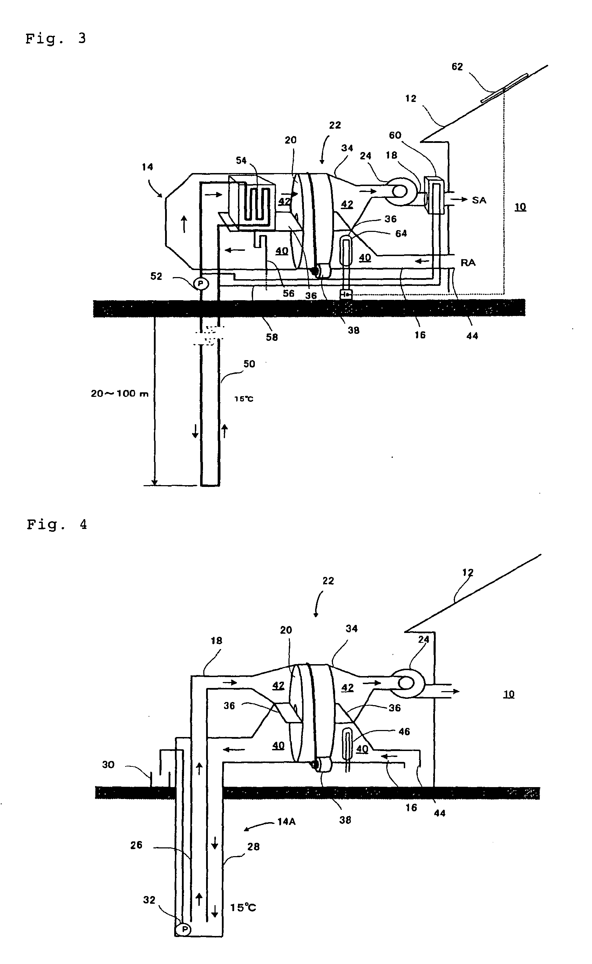

As hereunder, an action using the desiccant air-conditioning system constituted as above when a dehumidifying and cooling operation is carried out by circulation of the air in a room will be illustrated by referring to psychrometric chart of Fig. 2. Incidentally, temperature, humidity and other values in the following illustration are mere examples.

In Fig. 2, return air RA from the room 10 is in a state of A and, for example, its relative humidity is about 80%. Since the relative humidity is high, the far-infrared heater 46 becomes on, heats the surface of regeneration zone 40 of the desiccant wheel 20 and heats the introducing air passing through it to the state of B where, for example, the relative humidity is about 70% upon contacting to the desiccant. If the relative humidity of the return air RA is about 70%, the far-infrared heater 46 does not operate and it starts from the state B.

The introducing air in the heated state of B removes moisture from a desiccant wheel 20 upon passing through it and, at that time, an isenthalpic change takes place changing to the state C where the relative humidity is nearly 100%. The introducing air in a state C is further sent to a geothermal heat exchanger 14, cooled down to near 20°C at the gas-liquid heat exchange part 54, subj ects the moisture to dew condensation separation along the saturation line making the absolute humidity low and becomes to a state D. At that time, the so-called wetted surface heat transfer takes place from the state C to the state D at the gas-liquid heat exchange part and heat exchange between air and geothermal heat source takes place with an extremely high heat transfer coefficient.

Process air in the state D where temperature and absolute humidity were lowered passes through a desiccant wheel 20 at an adsorption zone 42, are dehumidified and becomes a state E which is almost correspondent to the required dew point temperature which is 15°C and is provided into the room via a supplying route 18. Incidentally, the above illustration is on a presumption that the change of state is ideal. Actually however, B is below an iso-relative humidity line of 70% humidity while E is above the iso-relative humidity curve.

As such, in this desiccant air-conditioning system, cooling and dehumidification are carried out only by one natural heat source which is geothermal energy. Therefore, none of other low temperature heat source and air-conditioning installment is necessary and there is provided an air-conditioning system saving energy and cost and being friendly to environment. There are other advantages that, since there is only one air route, just one blower 24 will do and, further, since the total constitution is simple, cost for equipment is cheap and installation even in middle floors of buildings is possible.

Further, since a far-infrared heater 46 is used in this embodiment, a desiccant wheel 20 at the inlet side of the regenerated air is dried by its radiant heat and then subjected to a rotational switching to a dehumidifying zone. Therefore, there are advantages that adsorbed amount of moisture from the process air increases and that heat loss is little. Incidentally, since the heating temperature at the state A to the state B is low, solar heat or low-temperature exhaust heat is able to be utilized whereby it is also possible to achieve further energy-saving effect and ecological effect.

Fig. 3 shows a desiccant air-conditioning system of the second embodiment of this invention and, since its fundamental constitution is the same as that in the above-mentioned embodiment, its detailed illustration will be omitted and the corresponding constitutions will be shown by the same references. The point where this embodiment is different from the above-mentioned one is that a branched piping 58 where a part of the heating medium of the heating medium passage 50 is branched is introduced into a cooling heat exchanger 60 placed in the supplying route 18. As a result thereof, temperature which is raised upon dehumidification by a desiccant wheel 20 is lowered and provided into a room to enhance the room-cooling effect as shown in the route from the state E to the state F in Fig. 2. Further, in this embodiment, electric power from a solar cell 62 is introduced into a far-infrared heater 64 for pre-heating to enhance the energy-saving effect.

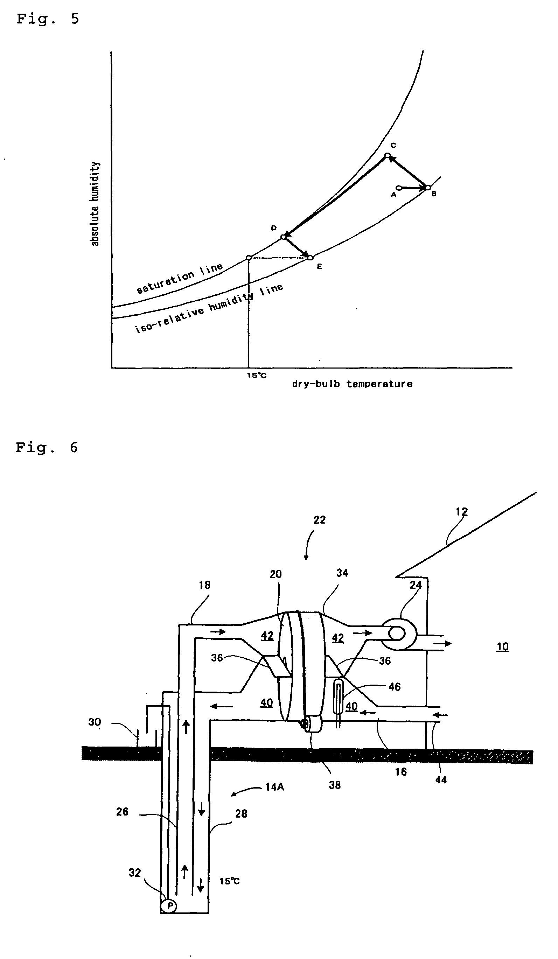

Fig. 4 shows a desiccant air-conditioning system of the third embodiment of this invention where outside makeup air is treated as process air and provided into the space in the room. A geothermal heat exchanger 14A is a type where air is directly introduced into underground and is constituted, for example, from a dual pipe made of metal having good heat conductivity such as copper and aluminum. The dual pipe is embedded in the earth with a depth of about 5 to 10 meters and temperature near its bottom is kept at about 15°C. Its inner pipe 26 is open above the bottom of an outer pipe 28, an air passage which reciprocates the outside and inside of the inner pipe 26 up and down is constituted, and the outer and inner air passages are set in such a manner that they become nearly the same cross-sectional area. In this example, the outer pipe 28 and the inner pipe 26 are connected to the introducing route 16 and the supplying route 18, respectively. In the bottom of the outer pipe 28, there is a drainage pump 32 which drains the condensed water to a drainage gutter 30.

In the example as shown by the drawing, one geothermal heat exchanger 14A is installed but, usually, plural exchangers are installed depending upon the size of the space to be air-conditioned 10. The plural geothermal heat exchangers 14A are connected in parallel to the desiccant dehumidifying apparatus 22. In that case, it is also possible that, depending upon the circumstance, an open-and-close valve is installed so as to set the numbers of the working exchangers whereby the numbers of the geothermal heat exchangers 14A used are able to be selected. It is of course possible that each geothermal heat exchanger 14A is equipped with a desiccant dehumidifying apparatus 22 separately. Incidentally, the place of the geothermal heat exchanger 14A to be placed may be either outside or inside of the building.

As same as in the above-mentioned embodiment, a casing 34 forming a cylindrical or disk-shaped inner space is installed on the earth and, in this casing 34, a desiccant dehumidifying apparatus 22 is constituted. The desiccant dehumidifying apparatus 22 has a desiccant wheel 20 which is installed in a freely rotatable manner, a partition board 36 which sections the inner spaces before and after the desiccant wheel 20 at a face including an axial line to constitute two partial spaces and a motor 38 which rotates and drives the desiccant wheel 20 at a predetermined rotational rate. One of the partial spaces is connected to an introducing route 16 forming a regenerating zone 40 where the desiccant wheel 20 is regenerated by an introduced air (moisture in the desiccant wheel 20 is removed) . Another partial space is connected to a supplying route 18 forming a adsorption zone 42 where the provided air is dehumidified by the desiccant wheel 20 (moisture is adsorbed with the desiccant wheel 20).

With regard to a desiccant wheel 20 as same as in the above-mentioned embodiment, it is possible to adopt a known one where a predetermined porous desiccant (adsorbing agent) is made into a disk-shaped material having a honeycomb-shaped reinforced structure. With regard to a raw material for the desiccant, it is preferred to use a material where difference in adsorbing and desorbing amounts is big within a range in which relative humidity is from 70 to 100% such as a functional organic sorptive agent having an acryl group, silica gel or active carbon and it is more preferred to use a material where antifungal and antibacterial properties are high at the range in which the relative humidity is high (such as a functional organic sorptive agent having an acryl group).

As same as in the above-mentioned embodiment, a far-infrared heater (heating means) 46 is installed at the inlet of the introducing route 16 or, in other words, inside the air intake 44 in an encountering manner to a desiccant wheel 20. This is used when the relative humidity of outside makeup air is high or the absolute humidity is high or the temperature is low and it may be installed upon necessity. In that case, it is possible that a humidity sensor is installed in the outside space and makes the far-infrared heater 46 on when the detected humidity is high. It is also possible that a heater is embedded in a desiccant wheel 20 as another heating means and is made on when its part is at the side of the introducing route 16. It is further possible that a heat exchanger which exchanges heat of process air with hot water is installed as a heating means at the upper stream side of the desiccant wheel 20 and that heat collected by a solar heat collector is used as a heat source for hot water.

Further, it is possible that a well-known controlling means is installed and that various operation controls are carried out using various sensors, etc. installed in the space to be air-conditioned, etc. For example, a desiccant air-conditioning system is able to be operated by both manual mode and automatic mode and, in the automatic mode, a desiccant wheel 20 is rotated when the humidity detected by a humidity sensor installed in the space to be air-conditioned (relative humidity, dew point temperature or absolute humidity) is higher than the predetermined allowable upper limit while, when the detected humidity is lower than the predetermined allowable value, the desiccant wheel 20 is stopped.

As hereunder, an action using the desiccant air-conditioning system constituted as above will be illustrated by referring to psychrometric chart of Fig. 5. Incidentally, temperature, humidity and other values in the following illustration are mere examples.

In Fig. 5, outside makeup air is in a state of A and, for example, its relative humidity is about 80%. Since the relative humidity is high, the far-infrared heater 46 becomes on, heats the surface of regeneration zone 40 of the desiccant wheel 20 and heats the introducing air passing through it to the state of B where, for example, the relative humidity is about 70% upon contacting to the desiccant. This introducing air removes moisture from a desiccant wheel 20 upon passing through it and, at that time, an isenthalpic change takes place changing to the state C where the relative humidity is nearly 100%. The introducing air in a state C is further sent to a geothermal heat exchanger 14A, cooled down to near 20°C, subjects the moisture to dew condensation separation along the saturation line making the absolute humidity low and becomes to a state D. At that time, the so-called wetted surface heat transfer takes place from the state C to the state D at the geothermal heat exchanger and heat exchange between air and geothermal heat source takes place with an extremely high heat transfer coefficient.

Process air in the state D where temperature and absolute humidity were lowered passes through a desiccant wheel 20 at an adsorption zone 42, are dehumidified and becomes a state E which is almost correspondent to the required dew point temperature which is 15°C and is provided into the room via a supplying route 18. Incidentally, the above illustration is on a presumption that the change of state is ideal. Actually however, B is below an iso-relative humidity line of 70% humidity while E is above the iso-relative humidity curve.

In the above, the above-mentioned cycle is performed with leaving the far-infrared heater 46 off when the relative humidity of outside makeup air is lower than 70%.

As such, in this desiccant air-conditioning system, cooling and dehumidification are carried out only by one natural heat source which is geothermal energy. Therefore, none of other low temperature heat source or air-conditioning installment is necessary and there is provided an air-conditioning system saving energy and cost and being friendly to environment. There are other advantages that, since there is only one air route, just one blower 24 will do and, further, since the total constitution is simple, cost for equipment is cheap and installation even in middle floors of buildings is possible.

Further, since a far-infrared heater 46 is used in this embodiment, a desiccant wheel 20 at the inlet side of the regenerated air is dried by its radiant heat and then subjected to a rotational switching to a dehumidifying zone. Therefore, there are advantages that adsorbed amount of moisture from the process air increases and that heat loss is little. Incidentally, since the heating temperature at the state A to the state B is low, solar heat or low-temperature exhaust heat is able to be utilized whereby it is also possible to achieve further energy-saving effect and ecological effect.

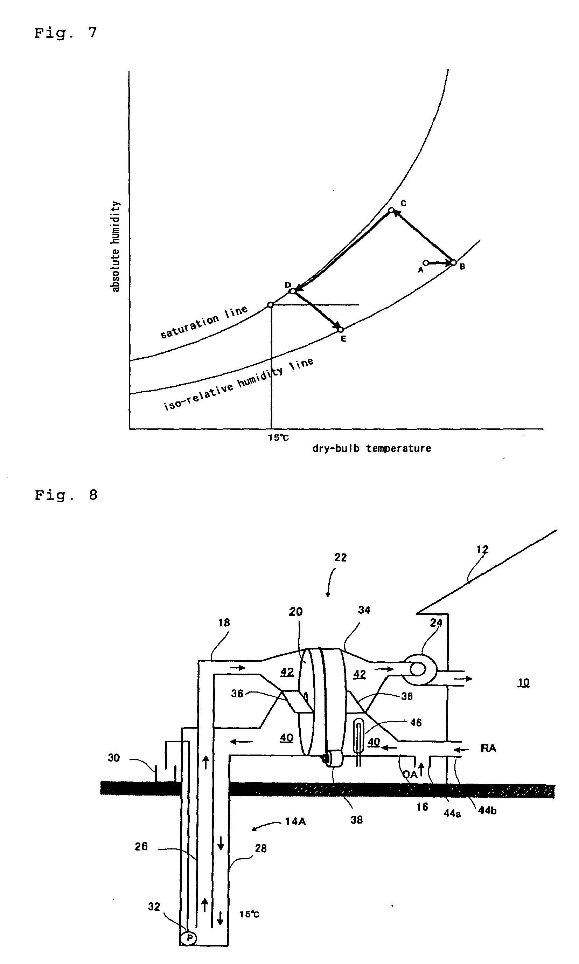

Fig. 6 shows another embodiment of this invention and the desiccant air-conditioning system thereof is constituted in such a manner that the return air from the room instead of the outside makeup air is cooled, dehumidified and provided again into the room. Fig. 7 is a drawing which shows psychrometric chart for illustrating the process thereof. In the embodiment of Fig. 4, air in the room is ventilated with outside makeup air and, therefore, hygienic environment of the space of the room is able to be maintained although the load for the treatment becomes large. On the contrary, in the case of this embodiment, air in the room having lower relative humidity is used for the process air and, as a result, there are advantages that load for the treatment is reduced and the attained humidity (absolute humidity) at the outlet of the process air is able to be made low although it is still necessary to consider in the ventilating function separately.

The process in this embodiment is the fundamentally same as that in the case of the previous embodiment except that the initial stage A of the process air is different. With regard to a heating means (far-infrared heater), it is used when the relative humidity of the air in the room to be introduced is high or, in other words, when absolute humidity is high or temperature is low the same as in the above-mentioned case and, therefore, it may be installed upon necessity. In that case, a sensor for temperature or for humidity for controlling the operation of the heating means is installed in the room.

Fig. 8 shows another embodiment of this invention and the desiccant air-conditioning system is equipped with air intakes 44a, 44b each opening to outside makeup air and to room, respectively whereby it is constituted in such a manner both outside makeup air and return air are taken in, cooled/dehumidified and provided into the room again. When the return air and outside makeup air are mixed to prepare the process air as such, it is now possible that the ventilating function of the embodiment of Fig. 4, the reducing function of treating load in the embodiment of Fig. 6 and the function of lowering the attained humidity (absolute humidity) of the outlet for the process air are able to be achieved at the same time.

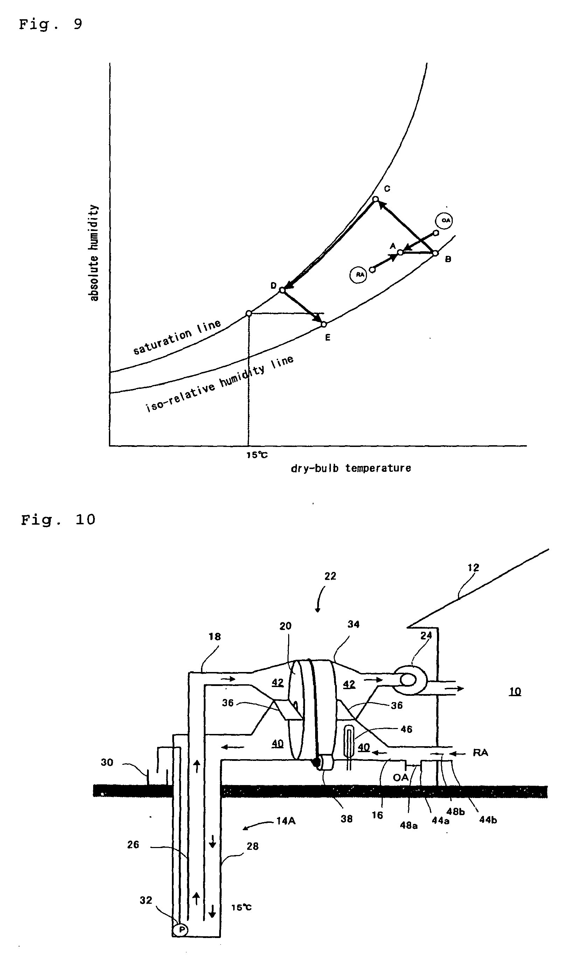

Fig. 9 is a drawing of psychrometric chart for illustrating the process in this embodiment. The process is fundamentally same as that in the previous embodiments except the initial state A of the process air is different and, therefore, its illustration is omitted.

Fig. 10 shows another embodiment of this invention and opening-and-closing dampers 48a, 48b are installed at the intakes 44a, 44b, respectively so that both outside makeup air and return air from the room are able to be taken in upon necessity. When opening and closing of each of the dampers 48a, 48b are controlled, operation of any of the patterns of all of the above-mentioned three embodiments is also possible.

### Explanation of Reference Signs in Drawings

- 10: space to be air-conditioned
- 12: building
- 14, 14A: geothermal heat exchanger
- 16: introducing route
- 18: supplying route
- 20: desiccant wheel
- 22: desiccant dehumidifying apparatus
- 24: blower
- 26: inner pipe
- 28: outer pipe
- 30: drainage gutter
- 32: drainage pump
- 34: casing
- 36: partition board
- 38: motor
- 40: regenerating zone
- 42: adsorption zone
- 44, 44a, 44b: air intake
- 46: far-infrared heater
- 48a, 48b: opening-and-closing damper
- 50: heating medium passage
- 52: pump
- 54: gas-liquid heat exchange part
- 56: drainage pipe
- 58: branched piping
- 60: cooling heat exchanger
- 62: solar cell
- 64: far-infrared heater

## Claims

1. A desiccant air-conditioning system which is **characterized in that** the system is equipped with an introducing route where process air is introduced into a geothermal heat exchanger, a supplying route where the process air which is cooled by the geothermal heat exchanger is introduced into a space to be air-conditioned and a desiccant wheel which is placed in an extending manner over both of the introducing route and the supplying route and, when the desiccant wheel is rotated so that each part thereof is successively positioned to said introducing route and supplying route, the process air after cooling is dehumidified by said desiccant wheel and the desiccant wheel is regenerated by the process air before cooling.

2. The desiccant air-conditioning system according to claim 1, wherein a heating means for heating the introduced air or the said desiccant wheel is provided in said introducing route.

3. The desiccant air-conditioning system according to claim 2, wherein far-infrared heater is used as said heating device.

4. The desiccant air-conditioning system according to any of claims 1 to 3, wherein a heating medium passage where heating medium is flown into the earth is used as said geothermal heat exchanger.
